# EUROPEAN PATENT SPECIFICATION

(11) **EP 3 406 528 B1**
(45) Date of publication and mention of the grant of the patent: **07.10.2020**
(21) Application number: 17172517.9
(22) Date of filing: 23.05.2017
(51) Int. Cl.: B64F 1/28, B64F 5/60, F01M 11/04, B64F 5/40

(54) **DRAINAGE SYSTEM**
DRAINAGESYSTEM
SYSTÈME DE DRAINAGE

(43) Date of publication of application: 28.11.2018
(73) Proprietor: Etihad Airways, Abu Dhabi (AE)
(72) Inventor: KLOSE, Stephan, P.O. Box: 35566 Abu Dhabi (AE); NEKKALAPUDI, Prasanth, P.O. Box: 46450 Abu Dhabi (AE)
(74) Representative: Spencer, James Michael

(56) References cited:
- WO-A2-2005/005792
- FR-A1- 2 936 274
- FR-A1- 3 018 772

## Description

### TECHNICAL FIELD

The present invention relates to drainage systems and methods, and in particular drainage systems and methods for sampling and draining fuel from aircraft fuel tanks.

### BACKGROUND

Water and other impurities often accumulate in aircraft fuel tanks as changes in ambient temperatures and pressures that occur during flying cause water vapour suspended in air inside the fuel tanks to condense. Aircraft engine operation can be disrupted by intake of water from the fuel system, which can lead to engine misfire or even stoppage. There is also a risk that water in the fuel system may cause microbiological contamination of fuel, corrosion and freezing of fuel lines and problems with fuel quantity indication. Therefore, aircraft fuel tanks often require regular sampling and testing for water concentration and contamination. For most aircraft, fuel sampling is a mandatory scheduled maintenance requirement in the aircraft's maintenance planning document (MPD).

Currently available sampling systems typically comprise telescopic funnels that are configured to be held against a drainage valve of an aircraft fuel tank by a technician and open the drainage valve to allow a quantity of fuel to drain from the fuel tank into a bottle or a bowser under gravity. The currently available sampling systems are typically complicated and time consuming to use. In addition, since it is necessary to sample fuel from each fuel tank of an aircraft, the sampling procedure for large aircraft with multiple fuel tanks can take upwards of 30 minutes and can require two or more technicians to perform. The currently available sampling systems can also be potentially hazardous, as there is a risk that fuel may escape during the sampling procedure. Aircraft fuel is often highly flammable and may be both toxic and a skin irritant, and therefore it is highly desirable to minimise spillage during sampling.

Defueling the fuel tanks of an aircraft is also a regularly required maintenance task for most aircraft, which can be performed separately or at the same time as fuel sampling. Defueling, or emptying the fuel tanks of fuel, it is often necessary before taking an aircraft out of service for maintenance or repair.

Most currently available defueling systems use a gravity feed to drain fuel from the aircraft fuel tanks, similar to the currently available sampling systems. An exemplary gravity feed drainage system is described in US Patent Publication No. 4453579, published on 12 June 1984 in the name of Gould. Defueling a fuel tank under gravity typically results in relatively low flow rates and long drain times. Some currently available defueling systems employ a vacuum pump to pump fuel from the aircraft fuel tanks in order to increase flow rate and reduce drain time. An exemplary vacuum pump drainage system is described in US Patent No. 6860300, issued to Spokane Industries, Inc. on 1 March 2005. As with sampling, defueling can be a time consuming and potentially hazardous procedure. Another exemplary system is described in international patent application no. WO 2005/005792 A2, in the name of RPM INDUSTRIES, INC., published on 20 January 2005.

It would be desirable to provide a drainage system that is capable of safely sampling fuel from the fuel tanks of an aircraft and emptying the fuel from the fuel tanks of an aircraft. It would also be desirable to provide a drainage system reduces the time required to sample fuel from the fuel tanks of an aircraft and empty the fuel from the fuel tanks of an aircraft, in order to reduce aircraft down time. It would also be desirable to provide a drainage system that requires a small number of users to operate, preferably requiring one user only to operate the system. It would also be desirable to provide a drainage system that is easily transportable. It would also be desirable to provide a drainage system that enables a user to perform an accurate and standardized procedure for sampling and draining fuel from the fuel tanks of an aircraft that is straightforward to repeat.

### SUMMARY OF INVENTION

The present invention is defined in the appended claims.

According to a first aspect of the present invention, there is provided a drainage system for draining fluid from a liquid storage tank. The drainage system comprises: a first conduit configured to fluidly connect to a liquid storage tank and a plurality of second conduits, each second conduit being fluidly connected to a measuring tank configured to hold liquid drained from the liquid storage tank. The drainage system further comprises a multiway valve comprising: a first passage fluidly connected to the first conduit; a plurality of second passages, each second passage being fluidly connected to one of the plurality of second conduits; and a controllable shutter configured to selectively direct fluid between the first passage and the plurality of second passages. The drainage system further comprises a pump arranged to pump fluid through the first conduit.

The drainage system of the present invention comprises a plurality of measuring tanks into which fluid from a liquid storage tank may be drained and a valve for selectively directing drained fluid into the measuring tanks. This arrangement enables selective separation of drained fluid into separate and distinct measuring tanks. In other words, the drainage system of the present invention enables fluid to be drained from a first liquid storage tank and stored in a first measuring tank and enables fluid to be drained from a second liquid storage tank and stored in a second measuring tank, separate from the drained fluid from the first liquid storage tank.

In preferred embodiments of the present invention, the drainage system may be configured to drain fluid from the fuel tanks of an aircraft.

The drainage system of the present invention may enable a user to sample fuel from each fuel tank of an aircraft and store the fuel from each fuel tank in a separate measuring tank. Separating the sampled fuel from each fuel tank into separate measuring tanks may enable a user to separately test fuel from each fuel tank and identify problems arising in particular fuel tanks. Storing the fuel from each fuel tank in separate measuring tanks may also enable a user to retest the fuel from each fuel tank after the sampling procedure has been performed, if necessary. This makes the drainage system of the present invention an ideal system for sampling fuel from the fuel tanks of an aircraft.

The drainage system of the present invention also comprises a pump arranged to pump fluid from a liquid storage tank. This may reduce the time taken to collect a sample of fluid from an aircraft fuel tank or the time taken to defuel an aircraft fuel tank compared to a gravity system. This makes the drainage system of the present invention an ideal system for defueling the fuel tanks of an aircraft.

The drainage system of the present invention may have any suitable number of measuring tanks. For example, the drainage system may have 2, 3, 4, 5, 6, 7, 8, 9 or 10 measuring tanks. In preferred embodiments of the present invention, where the system is configured to drain fluid from aircraft fuel tanks, the number of measuring tanks is equal to or greater than the number of fuel tanks of the aircraft for which the system is configured to be used. For example, where the aircraft for which the system is configured to be used has 4 fuel tanks, the system of the present invention may have at least 4 measuring tanks. Typically, the drainage system comprises 6 measuring tanks.

The number of second conduits of the drainage system is dependent on the number of measuring tanks.

As used herein, the term 'fluid' is used to describe both liquids and gasses.

As used herein, the term 'liquid storage tank' is used to describe a container configured to hold a liquid. A liquid storage tank may or may not be hermetically sealed, but preferably is hermetically sealed.

In some embodiments, the multiway valve may be a manually operated multiway valve. In other words, the multiway valve may be configured to be operated by a user to control the controllable shutter to selectively direct fluid between the first passage and the plurality of second passages. As used herein, the term "manually operated" is used to describe a system that is operated by a user, such as by rotating a handle, rather than by a machine as part of an automated procedure. Providing a single multiway valve for selecting the measuring tank into which fluid is to be drained enables the drainage system of the present invention to be straightforward to operate for a small number of users, and preferably the system is operable by one user only.

In other embodiments, the multiway valve may be controlled by a machine such that actuation of the multiway valve is controlled by an automated procedure. This may further reduce the complexity of operating the system, and may enable fewer users to operate the system.

Preferably, the multiway valve is a multiway ball-valve comprising: a valve body comprising the first passage and the plurality of second passages; a ball shutter rotatably mounted in the valve body and configured to selectively direct fluid between the first passage and the plurality of second passages; and an actuator configured to rotate the ball shutter, wherein rotation of the ball shutter alters the direction of fluid between the first passage and the plurality of second passages.

Preferably, the first passage substantially extends in a first direction and the plurality of second passages substantially extend in a plurality of second directions, the second directions being substantially perpendicular to the first direction. Preferably, the second directions extend in a plane.

Preferably, the ball shutter is rotatable in the valve body substantially about an axis extending in the first direction. Preferably the first passage extends along an axis, and the ball shutter is rotatable in the valve body about the axis of the first passage.

Preferably, the ball shutter comprises an L-shaped channel for directing fluid between the first passage and one of the second passages in the valve body. Preferably, a first section of the L-shaped channel is aligned with the first passage of the valve body and extends substantially in the first direction. Preferably a second section of the L-shaped channel, substantially perpendicular to the first section, is aligned with the plane of the second passages. Preferably the ball shutter is rotatable in the valve body about the axis of the first passage. In other words, the ball shutter may be rotatable such that the first section of the L-shaped channel remains aligned with the first passage of the valve body and the second section of the L-shaped channel rotates in the plane of the second passages to align with each of the second passages at different points along its path of rotation.

Preferably, the valve body comprises a cavity for rotatably receiving the ball shutter. Preferably, the valve body comprises a top face, a bottom face and plurality of side faces extending between the top and bottom faces. Preferably, the first passage extends between the top face and the cavity. Preferably, the second passages extend between the side faces and the cavity. Preferably, the L-shaped channel of the ball-valve connects the first passage with each of the second passages when the ball shutter is rotated in the valve body. Preferably, the actuator extends through the bottom face of the valve body.

The valve body may have any suitable number of side faces. The number of side faces of the valve body may be equal to than the number of second passages. Preferably the number of side faces of the valve body is greater than the number of second passages.

The actuator of the multiway ball-valve may be a handle configured to be manually rotated by a user.

The multiway valve may have any suitable number of second passages. Preferably, the number of second passages of the multiway valve is equal to the number of second conduits and measuring tanks. However, in some embodiments the number of second passages of the multiway valve may be greater than the number of second conduits and measuring tanks.

The valve body and the ball shutter may be made from any suitable material. For example, the valve body and the ball shutter may be made from a metal, such as brass, aluminium or stainless steel, a plastics material or a composite material.

The measuring tanks are configured to hold fluid drained from a liquid storage tank. In some embodiments, each of the plurality of measuring tanks may be configured to hold a different volume of fluid. However, preferably the plurality of measuring tanks are substantially identical. Each of the plurality of measuring tanks may be configured to hold the same volume of fluid. Each of the plurality of measuring tanks may be configured to hold a first volume of fluid. The first volume may be between about 30 litres and 15 litres, and may preferably be about 23 litres.

Each measuring tank may comprise a level indicator configured to indicate the volume of liquid held in the measuring tank. In a preferred embodiment, each measuring tank comprises a minor portion and major portion, the minor portion having a smaller volume than the major portion and being fluidly connected to the major portion. In the preferred embodiment, the minor portion forms the level indicator. The minor portion may comprise a viewing window configured to enable a user to see the volume of liquid held in the minor portion. The level indicator my comprise indicia to indicate the volume of liquid held in the measuring tank. The indicia may be provided on a wall of the measuring tank adjacent to the viewing window or on the viewing window and the level of liquid visible through the viewing window may align with the indicia to indicate the level of liquid held in the measuring tank.

Each measuring tank may comprise a sampling outlet for draining fluid held in the measuring tank. Each measuring tank may also comprise a sampling valve configured to control the drainage of fluid from the measuring tank through the sampling outlet. The sampling outlet and sampling valve may enable a user to drain a quantity of fluid from the measuring tank. This may enable a user to test the fluid stored in the measuring tank.

The measuring tanks may be made from any suitable material. For example, the measuring tanks may be made from a metal, such as brass, aluminium or stainless steel, a plastics material or a composite material.

In preferred embodiments, the drainage system further comprises a storage tank. In the preferred embodiments, each of the measuring tanks comprises a drainage outlet fluidly connected to the storage tank for draining fluid from the measuring tank into the storage tank. Each measuring tank may also comprise a drainage valve for controlling drainage of fluid from the measuring tank to the storage tank through the drainage outlet. In some embodiments the drainage valve and the sampling valve may be the same valve. In other words, each measuring tank may have an outlet connected to a three-way valve, the three-way valve being connected at a first end to the drainage outlet and at a second end to the sampling outlet. The three-way valve may be any suitable type of three-way valve. The three-way valve may be a ball valve.

Providing a storage tank, in addition to the measuring tanks, may enable a user to combine the fluid held in the measuring tanks into a single tank, which may facilitate emptying of the drainage system. The storage tank may also be used to hold excess liquid drained from a liquid storage tank, if the selected measuring tank becomes full. In the preferred embodiments, where the system is configured for draining fuel from aircraft fuel tanks, a user may hold the fuel from each fuel tank in the measuring tanks until testing has been performed, and subsequently drain the fuel from the measuring tanks into the storage tank for storage.

The storage tank may be configured to hold a second volume of fluid. Preferably, the second volume of fluid is at least as large as the sum of the first volumes of all of the measuring tanks. The second volume may be at least about 90 litres, at least about 138 litres or at least about 180 litres. Preferably the second volume is larger than the sum of the first volumes of the plurality of measuring tanks. Preferably the second volume is at least 325 litres and may be about 360 litres.

Preferably, the storage tank comprises a drainage outlet for draining fluid from the storage tank. The storage tank may also comprise a drainage valve for controlling drainage of fluid from the storage tank through the drainage outlet.

In some embodiments, the storage tank may also comprise a sampling outlet and a sampling valve for controlling the drainage of fluid from the storage tank through the sampling valve. The sampling outlet and valve may enable a user to drain a quantity of fluid from the storage tank for testing. The drainage valve and the sampling valve may be the same valve, and may be arranged as described above in relation to the measuring tanks.

The storage tank may comprise a level indicator configured to indicate the volume of liquid held in the storage tank. In a preferred embodiment, the storage tank comprises a minor portion and major portion, the minor portion having a smaller volume than the major portion and being fluidly connected to the major portion. In this preferred embodiment, the minor portion forms the level indicator. The minor portion may comprise a viewing window configured to enable a user to see the volume of liquid held in the minor portion. The level indicator my comprise indicia to indicate the volume of liquid held in the storage tank. The indicia may be provided a wall of the storage tank, adjacent to the viewing window or on the viewing window and the level of liquid visible through the viewing window may align with the indicia to indicate the level of liquid held in the storage tank.

The storage tank may be made from any suitable material. Preferably the storage tank is made from the same material as the measuring tanks. However, the storage tank may be made from a different material to the measuring tanks.

The drainage system of the present invention may further comprise a three way valve comprising: a first passage fluidly connected to the first conduit; a second passage fluidly connected to the first passage of the multiway valve; a third passage fluidly connected to the drainage outlet of the storage tank; and a controllable shutter configured to selectively direct fluid between either the first conduit and the multiway valve or the first conduit and drainage outlet of the storage tank. The pump may be arranged to pump fluid either through the first conduit to the multiway valve and the measuring tanks or from the drainage outlet of the storage tank through the first conduit and out of the system depending on the selected direction of the controllable shutter of the three-way valve.

The three-way valve may enable a user to quickly drain the storage tank through the drainage outlet using the same pump that is used to drain fluid from liquid storage tanks into the measuring tanks. Using a single pump for draining liquid storage tanks and draining the storage tank of the system may reduce the cost, complexity and weight of the system, compared to a system comprising a separate, second pump for draining the storage tank. In some of the preferred embodiments of the present invention, the system may be configured to pump fluid held in the storage tank back into the fuel tanks of an aircraft.

The pump may be any suitable pump for draining fluid from a liquid storage tank. Preferably, the pump is a diaphragm pump. The pump may be a gas powered pump. The pump may be powered by a compressed gas source, such as a compressed air or compressed nitrogen source. The compressed gas source may form part of the drainage system or may be external to the drainage system.

In preferred embodiments, the drainage system is a drainage system for draining aircraft fuel tanks. As such, the first conduit may be configured to fluidly connect to a drainage outlet of a fuel tank of an aircraft. The first conduit may comprise a coupler at one end configured to fluidly connect to the drainage outlet of an aircraft fuel tank.

The first conduit may comprise a flexible hose. The flexible hose may facilitate storage of the first conduit, for example on a reel, when it is not in use. The first conduit may also comprise a rigid pipe. The rigid pipe may help a user to align and engage the coupler with the drainage valve of the fuel tank. The first conduit may comprise both a flexible hose and a rigid pipe that are fluidly couplable. Where the fist conduit comprises both a flexible hose and a rigid pipe, the first conduit may further comprise a releasable connector for releasably coupling the hose and the pipe, such that the hose and pipe may be uncoupled or disconnected when the drainage system is not in use. The first conduit may further comprise a valve, such as a ball-valve, between the flexible hose and the rigid pipe for selectively permitting and substantially preventing or inhibiting fluid flow between the flexible hose and the rigid pipe.

The system may comprise two or more rigid pipes of different lengths for draining tanks at different locations on the aircraft. For example, an aircraft may comprise fuel tanks along the wings, from the fuselage to the distal end, and on the fuselage. A first, long rigid pipe may be provided for draining the fuel tanks located towards the distal end of the wings of the aircraft and a second, short rigid pipe may be provided for draining the fuel tanks located at or towards the fuselage. The length of the rigid pipes will depend on the size of the aircraft and the location of the fuel tanks on the aircraft with which the drainage system is to be used. Typically, the fuel tanks located towards the distal ends of the wings are located higher off the ground than the fuel tanks located towards the fuselage and at the fuselage.

The coupler to couple the first conduit to the drainage valve of an aircraft fuel tank may comprise a suction cup. The pump may be fluidly connected to the suction cup to provide suction to the suction cup for securing the suction cup to the aircraft. Preferably the coupler is fixed to the purger pipe. However, in some embodiments the coupler may be releasably secured to the end of the rigid pipe. As such, different couplers may be provided at the end of the rigid pipe for engagement of the first conduit with different types of fuel tank drainage valves.

According to a second aspect of the present invention, there is provided a vehicle comprising a drainage system according to the first aspect of the present invention.

As used herein, the term 'vehicle' is used to describe any machine capable of transporting a drainage system according to the first aspect of the present invention. A vehicle may be self-powered, such as by a motor or other means of propulsion or a vehicle may require an external power source, such as a tractor, that may tow or push the vehicle.

The vehicle may comprise a chassis on which the drainage system is mounted. The chassis may be any suitable type of chassis. Preferably the chassis is made from a relatively rigid and durable material, such as mild steel, stainless steel or aluminium, and the chassis is substantially rectangular in shape.

The vehicle may have any suitable number of wheels for movably supporting the chassis. Preferably, the vehicle comprises two or more wheels. The wheels may be arranged in any suitable arrangement. In an exemplary embodiment, the vehicle may have two wheels arranged towards the rear end of the chassis. In this exemplary embodiment, the vehicle may have one or more legs arranged towards the front end of the chassis on which the vehicle may be supported when the vehicle is stationary. In a second exemplary embodiment, the vehicle may comprise three wheels arranged with a pair of wheels towards the rear end of the chassis and a single wheel towards the front end of the chassis. Preferably the vehicle comprises four wheels arranged towards the corners of the chassis.

In some embodiments, the vehicle may be configured to be towed by another vehicle. In other words, the vehicle may be a dolly or a trailer. In other embodiments, the vehicle may be a powered vehicle and may comprise one or more motors for powering the wheels to move the vehicle.

According to a third aspect of the present invention, there is provided a method of draining fluid from the fuel tanks of an aircraft, the method comprising:
providing a drainage system as claimed in any preceding claim;
selecting a first fuel tank of an aircraft to be drained;
selecting a first measuring tank of the drainage system to hold drained fluid from the selected first fuel tank of the aircraft;
adjusting the multiway valve to direct fluid from the first conduit to the selected first measuring tank;
fluidly connecting the first conduit of the drainage system to an outlet of the selected first fuel tank of the aircraft; and
operating the pump of the drainage system to draw fluid from the selected first fuel tank of the aircraft through the first conduit and into the selected first measuring tank.

The method may further comprise:
selecting a second fuel tank of the aircraft to be drained;
selecting a second measuring tank of the drainage system to hold drained fluid from the selected second fuel tank of the aircraft;
adjusting the multiway valve to direct fluid from the first conduit to the selected second measuring tank; and
fluidly connecting the first conduit of the drainage system to an outlet of the selected second fuel tank of the aircraft; and
operating the pump of the drainage system to draw fluid from the selected second fuel tank of the aircraft through the first conduit and into the second selected measuring tank.

It should be clear that features described in relation to one aspect of the invention may be applied to other aspects of the invention, alone or in combination with other described aspects and features of the invention.

### BRIEF DESCRIPTION OF DRAWINGS

Embodiments of the invention will now be described in detail, with reference to the accompanying drawings, in which:
Figure 1 is a perspective view of a drainage cart according to a first embodiment of the present invention;

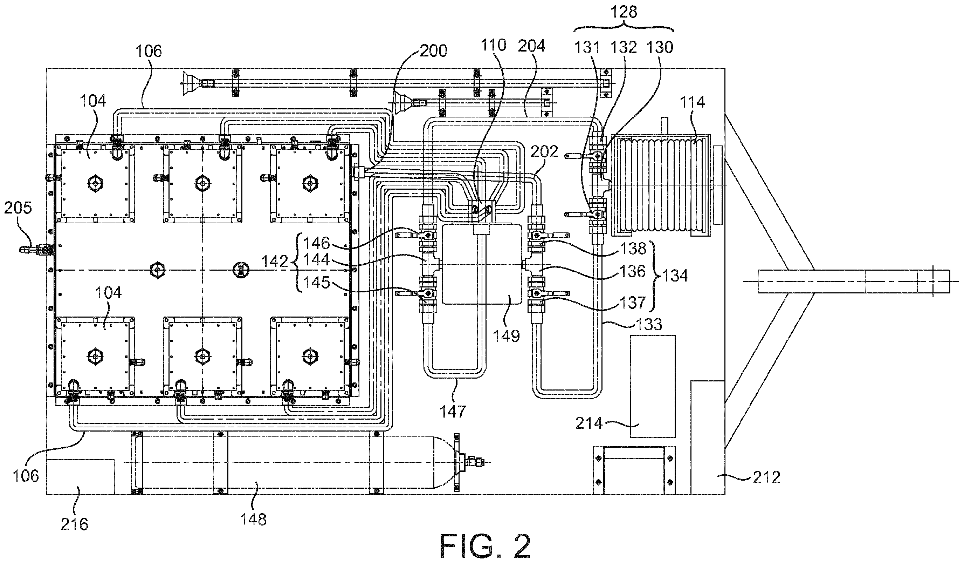

Figure 2 is a plan view of the drainage cart of Figure 1;

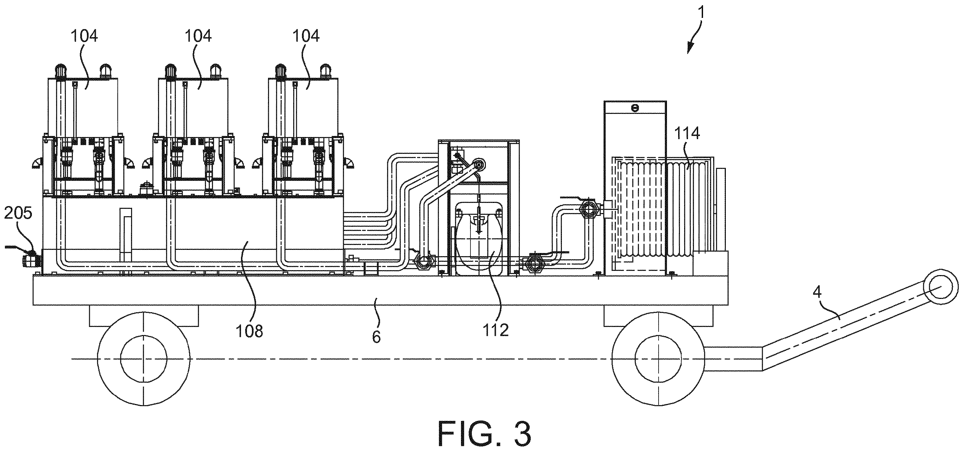

Figure 3 is a side view of the drainage cart of Figure 1;
Figures 4 is an exploded view of a multiway valve of the drainage cart of Figure 1;
Figure 5 is a cross-sectional view of the shutter of the multiway valve of Figure 4;
Figure 6 is a cross-sectional view of the valve body of the multiway valve of Figure 4;

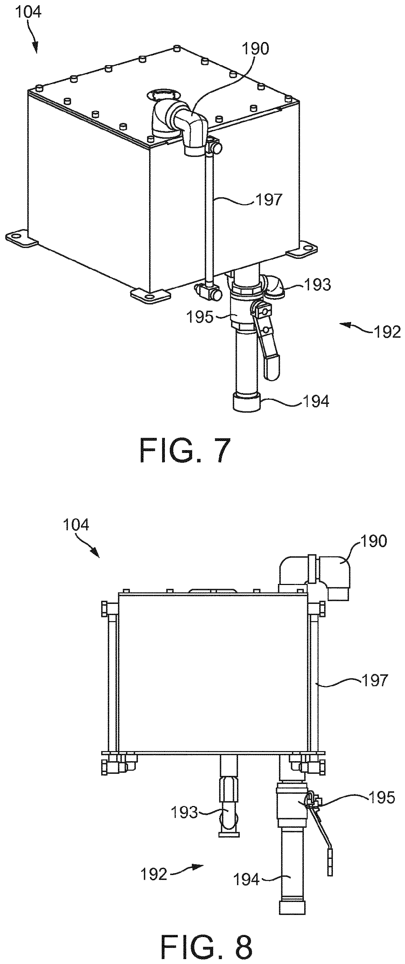

Figure 7 is a perspective view of a measuring tank of the drainage cart of Figure 1; and
Figure 8 is a side view of the measuring tank of Figure 7.

### DETAILED DESCRIPTION

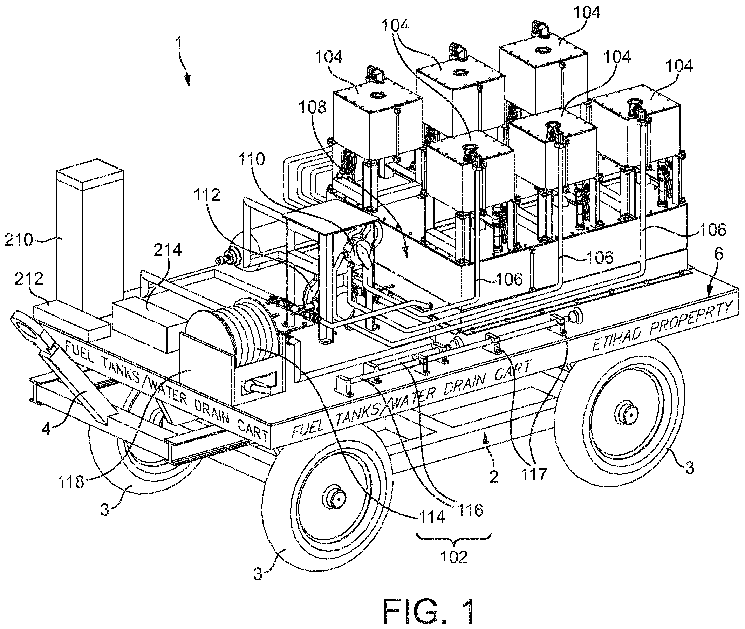

Figure 1 shows a drainage cart according to a first embodiment of the present invention.

The drainage cart 1 comprises a chassis 2 formed from lengths of mild steel box section welded into a substantially rectangular frame. The chassis 2 is supported at its corners on four wheels 3 that are rotatably secured to the chassis such that the chassis is movably supported on the wheels. A tow bar 4 is hingedly connected to the chassis 2, at the front end, such that the chassis 2 may be attached to a motorised vehicle, such as a tractor, and towed into position by the motorised vehicle.

A platform 6 is secured above the chassis 2. The platform 6 comprises a sheet steel deck on which a drainage system, according to an embodiment of the present invention, is mounted. The chassis 2, wheels 3 and platform 6 together form a trailer that movably supports the drainage system. Suitable steering trailers are currently available from the McMaster-Carr Supply Company.

The drainage cart 1 is configured to be towed by a separate motorised vehicle. However, it will be appreciated that in other embodiments the drainage cart may be a self-propelled vehicle and may comprise a motor or other suitable propulsion means.

It will also be appreciated that the drainage cart may have any other suitable number of wheels. For example, the vehicle may have two wheels, arranged towards the rear end of the chassis and legs or a rest at the front end on which the vehicle may be supported when the vehicle is stationary.

The drainage system, which is mounted on the platform 6, comprises a first conduit 102, measuring tanks 104, second conduits 106, a storage tank 108, a multiway valve 110 and a diaphragm pump 112.

The first conduit 102 comprises a hose pipe 114 and two purger pipes 116 that are releasably couplable to the hose pipe 114.

The hose pipe 114 comprises a flexible rubber hose that may be wound around a reel 118 when it is not in use. The reel 118 comprises a frame that is screwed to the platform 6 towards the front end of the cart. The hose pipe 114 comprises a first end having a coupler for fluidly connecting to one of the purger pipes 116 and a second end that is fluidly connected to the pump 112 and multiway valve 110. The coupler at the first end of the hose pipe 114 comprises a quick release latch (not shown) to enable quick removal of a purger pipe 116 from the hose pipe 114 and further comprises a ball-valve (not shown) for fluidly sealing the hose pipe 114 from a purger pipe 116.

The two purger pipes 116 comprise a first, long purger pipe and a second, short purger pipe. The long and short purger pipes are substantially identical apart from the lengths of the pipes. The long purger pipe is provided for draining fluid from the fuel tanks at the distal ends of the wings of an aircraft and the short purger pipe is provided for draining fluid from fuel tanks at or towards the fuselage of an aircraft. The purger pipes 116 may have any suitable length, but typically the short purger pipe has a length of about 610 mm (about 24 inches) and the long purger pipe has a length of about 1830 mm (about 72 inches).

Each purger pipe 116 comprises a substantially rigid aluminium pipe having a first end comprising a coupling for fluidly coupling the purger pipe 116 to a drainage valve of a fuel tank of an aircraft and a second end, opposite the first end, comprising a coupling for fluidly coupling to the first end of the hose pipe 114. A plurality of clips 117 are screwed onto the platform 6 along one side of the platform 6, for holding the purger pipes 116 in an easily accessible position on the drainage cart when the first conduit 102 is not in use and the purger pipes 116 are disconnected from the hose pipe 114.

The second end of the hose pipe 114 is fluidly connected to the multiway ball valve 110 via the pump 112. More specifically, the second end of the hose pipe 114 is fluidly connected to a first three-way valve 128. The first three-way valve 128 comprises a T-junction 130 comprising a first end fluidly connected to the second end of the hose pipe 114, a second end fluidly connected to a first ball-valve 131 and a third end fluidly connected to a second ball-valve 132. A pipe 133 fluidly connects the first ball-valve 131 of the first three-way valve 128 to a second three-way valve 134 at the inlet of the pump 112. The second three-way valve 134 comprises a T-junction 136 comprising a first end fluidly connected to the inlet of the pump 112, a second end fluidly connected to a first ball-valve 137 and a second end fluidly connected to a second ball-valve 138. The outlet of the pump 112 is fluidly connected to a third three-way valve 142. The third three-way valve 142 comprises a first end fluidly connected to the outlet of the pump 112, a second end fluidly connected to a first ball-valve 145 and a third end fluidly connected to a second ball-valve 146. A pipe 147 fluidly connects the first ball-valve 145 of the third three-way valve 142 to the multiway valve 112.

When the first ball-valves 131, 137, 145 of the three three-way valves 128, 134, 142 are open, and the second ball-valves 132, 138, 146 of the three three-way valves 128, 134, 142 are closed, a continuous path is formed along which fluid may flow between the first end of the first conduit 102, the pump 112 and the multiway valve 110.

In this embodiment, all of the ball-valves are manually operated ball valves, having handles that may be rotated by a user to open or close the valve. It will be appreciated that the ball valves may be any other suitable type of valve. It will be appreciated that the three-way valves may be any other suitable type of three-way valve. It will also be appreciated that the valves and fittings of the drainage system may be any suitable size and may be made from any suitable material, such as brass, aluminium or plastic.

The pump 112 is a gas powered diaphragm pump that is driven by a compressed nitrogen source, in the form of a cylinder 148. The compressed nitrogen source forms part of the drainage system 1 and is secured in a holder that is screwed to the platform 6. It will be appreciated that the pump may be driven by a compressed air source or any other suitable compressed gas source. It will also be appreciated that the pump may be driven from an external compressed gas source. Both the nitrogen cylinder 148 and the inlet to the pump comprise regulators (not shown) for controlling the pressure delivered to the pump.

The pump 112 is mounted in a stand 149 formed from welded lengths of mild steel angle section. The stand is secured to the platform 6 with screws. The stand 149 extends above the pump 112 to a height of about 585 mm (about 23 inches) from the platform 6, and includes a substantially vertical mounting plate formed from mild steel sheet supported above the pump 112, on which the multiway valve 110 is secured.

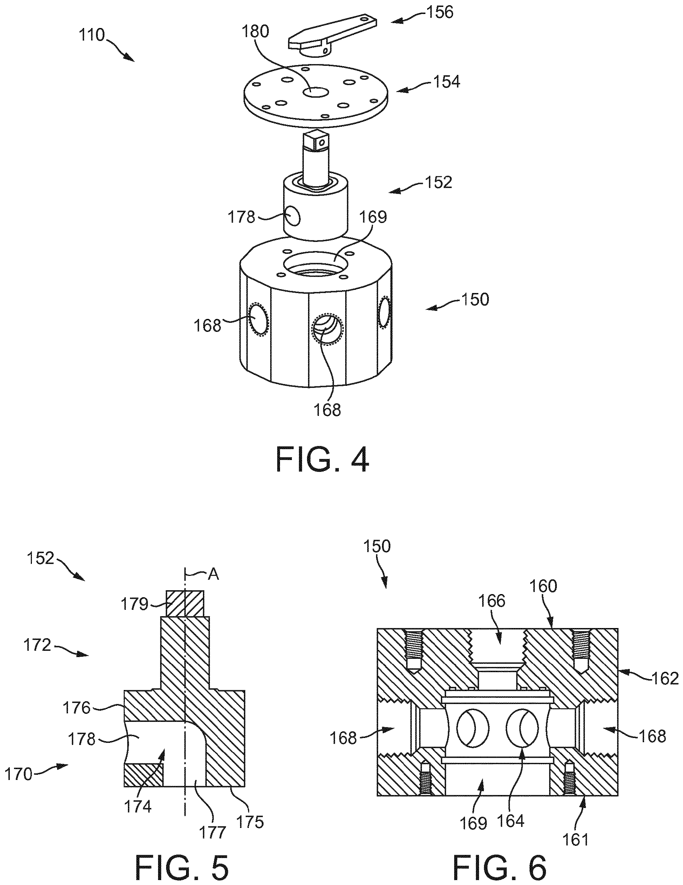

The multiway valve 110 is shown in Figures 4 to 6. The multiway valve 110 generally comprises a valve body 150, a ball shutter 152, a holding plate 154 and a handle 156.

The valve body 150 is formed from a single piece of brass and comprises a substantially cylindrical body having planar top face 160, a planar bottom face 161 and twelve substantially planar side faces 162. The side faces 162 extend between the top and bottom faces 160, 161 and are substantially perpendicular to the top and bottom faces 160, 161.

The valve body 150 further comprises a substantially circularly cylindrical central cavity 164 for rotatably receiving the ball shutter 152. A first passage 166 extends between the front face 160 and the cavity 164 of the valve body 150. Second passage 168 extend between alternate side faces 162 and the cavity 164, substantially perpendicular to the direction of the first passage 166. The second passages 168 are arranged to extend substantially in a plane that is substantially perpendicular to the direction of the first passage 166. A rear passage 169 is also provided for inserting the shutter valve 152 into the cavity 164. The rear passage 169 extends between the rear face 161 and the cavity 164 and has a diameter that is substantially similar to the diameter of the cavity 164.

The first passage 166 and the second passages 168 are substantially identical and are configured to be fluidly coupled to flexible hose pipes. The passages 166 and 168 have a first narrow portion towards the cavity 164, and a second wide portion towards the face of the valve body 150. The second wide portion is threaded and configured to receive an end of a threaded pipe insert (not shown). The opposite ends of the threaded pipe inserts are configured to be inserted into an end of a hose pipe, with an interference fit, and to be clamped to the hose pipe by an external clamp (not shown) arranged over the end of the hose pipe. It will be appreciated that the first and second passages of the valve body 150 may be configured for use with any other suitable means for securing and fluidly connecting hose pipes to the passages.

The ball shutter 152 comprises a substantially circularly cylindrical brass body, having a shutter part 170 and an axel part 172 arranged substantially along a central axis A. The shutter part 170 is has substantially the same diameter as the cavity 164 and the rear passage 169 of the valve body 150, such that the shutter part 170 may be closely received in the cavity 164 of the valve body 150. The axel part 172 has a diameter that is narrower than the shutter part 170 and a length that is sufficient for the axel part 172 to extend out of the rear passage 169 when the shutter part 170 is fully received in the cavity 164.

The shutter part 170 has an L-shaped channel 174 extending between a front face 175 and a side face 176. A first section 177 of the L-shaped channel 174 extends into the first shutter part 170 from the front face 175 and is aligned with the axis A of the shutter 152. A second section 178 of the L-shaped channel 174 extends into the first shutter part 170 from the side face 176 and joins the first portion 177 to form a continuous L-shaped channel.

The axel part 172 comprises a square distal tip 179, comprising a square receiving portion for receiving a square cavity (not shown) of the handle 156. The square shape of the distal tip 179 of the axel part 172 and the cavity of the handle 156 enables rotation of the handle 156 about the axis A to cause rotation of the axel part 172 of the shutter 152 about the axis A. This in turn causes rotation of the shutter part 170 of the shutter 152 about the axis A.

The holding plate 154 is a substantially circular plate made of brass, with a diameter that is substantially similar to the diameter of the valve body 150. The holding plate 154 has a central aperture 180 with a width that is substantially similar to the width of the axel part 172 of the shutter 152, which enables the axel part 172 to extend through the central aperture 180 when the holding plate is arranged over the valve body 150.

To assemble the multiway valve 110, the first shutter part 170 of the ball shutter 152 is inserted into the cavity 164 of the valve body 150 via the rear passage 169 until the front face 175 of the shutter valve 152 abuts the front end of the cavity 164. In this position, the first portion 177 of the L-shaped channel 174 of the shutter 152 is aligned with the first passage 166 of the valve body 150. The second axel part 172 of the ball shutter 152 extends out of the rear passage 169 of the valve body 150 and the holding plate 154 is arranged against the bottom face 161 of the valve body 150, with the axel part 172 of the shutter 152 extending through the central aperture 180. The holding plate 154 is secured against the bottom face 161 of the valve body 150, with screws, and the holding plate 154 retains the shutter 152 in the cavity 164 of the valve body 150. The handle 156 is arranged on the axel part 172 of the shutter 152, with the square tip 179 of the axel part 172 received in the square cavity of the handle 156. The handle 156 is then secured on the axel part 172 with screws.

When the multiway valve is assembled, the handle 156 may be rotated about the central axis A of the ball shutter 152, and the rotation may cause the second portion 178 of the L-shaped channel 174 to rotate about the inner surface of the cavity 164 and align the second portion 178 with each of the second passages 168 of the valve body 150, whilst the first portion 177 of the L-shaped channel 174 maintains its alignment with the first passage 166 of the valve body 150. As such, a user may rotate the handle 156 of the multiway valve 110 to select which of the second passages 168 of the valve body 150 is aligned with the second portion 178 of the L-shaped channel 174 of the ball shutter 152. Alignment of the second portion 178 of the L-shaped channel 174 with a second passage 168 provides fluid connection between the first passage 166 of the valve body 150 and the aligned second passage 168 of the valve body 150.

The drainage system comprises six measuring tanks 104. The number of measuring tanks 104 corresponds to the number of fuel tanks provided on the aircraft that the drainage system is to be used, for example, a Boeing 787-9. It will be appreciated that in other embodiments the number of measuring tanks may be increased or decreased to meet the requirements of the aircraft with which it is to be used.

Each measuring tank 104 forms a substantially cuboidal hollow metallic shell, formed from welded stainless steel sheet to form a liquid tight container. Each measuring tank 104 is about 304.8 mm (12 inches) wide, about 304.8 mm (12 inches) long and about 254 mm (10 inches) high. As such, each measuring tank 104 can hold about 23 litres of fluid.

Each measuring tank 104 has an inlet 190 at the upper face, the inlet 190 being fluidly connected to one of the second passages 168 of the multiway ball valve 110 by a second conduit 106. Each second conduit 106 comprises a flexible rubber hose, substantially similar to the flexible hose 114 of the first conduit 102. A first end of each second conduit 106 is fluidly connected to an inlet of a measuring tank 104 and a second end of each second conduit 106 is fluidly connected to a second passage 168 of the multiway ball valve, substantially as described above. As such, when the shutter 152 of the multiway ball valve 110 is rotated to select a second passage 168, the selected second passage 168 is fluidly connected to a measuring tank 104. The second conduits are secured to the platform with clips, where necessary, to prevent the second conduits 106 from moving and disconnecting from the inlets of the measuring tanks 104 or the second passages 168 of the multiway valve 110.

Each measuring tank 104 comprises outlets 192 depending from an underside, the outlets 192 comprising a sampling outlet 193 and a drainage outlet 194. The sampling outlet 193 comprises a miniature ball valve (not shown) and the drainage outlet 194 comprises a ball valve 195, such that fluid held in the measuring tank 104 may be retained in the measuring tank or drained either through the sampling outlet 193 or the drainage outlet 194 depending on the orientations of the miniature ball valve and the ball valve 195.

Each measuring tank 104 also comprises a liquid level indicator 197 comprising a clear pipe secured to an outer side of the container, and fluidly connected to the internal volume of the container. A scale (not shown) indicating liquid level in the internal volume of the measuring tank is marked on the outer side of the tank, next of the clear pipe, such that when liquid is held in the measuring tank, the liquid level in the pipe may align with an indicator on the scale, the indicator corresponds to the volume of liquid that is held in the measuring tank.

Since the density of water is typically greater than the density of aircraft fuel, when a mixture of fuel and water is held in the measuring tank, the fuel and water tend to separate, and the fuel tends to rise above the water. As such, it may be possible to drain the water from the bottom of the measuring tanks 104 through the sampling outlets 193 at the underside of the measuring tanks 104. In addition, the separation of the water and fuel in the measuring tanks 104 may enable a user to determine both the volume of water and the volume of fuel held in the measuring tank from a visual inspection of the liquid level indicator 197. Furthermore, a user may be able to control the drainage of water from the measuring tanks 104 through the sampling outlets 193 by controlling the opening of the miniature ball valves based on a visual inspection of the liquid level indicator 197. In other words, a user may be able to see a line of separation between the water and fuel held in a measuring tank 104 in the liquid level indicator 197. The user may be able to drain fluid from the measuring tank 104 through the sampling outlet 193 by opening the miniature ball valve. The user may maintain the miniature ball valve in the open position until the line of separation is no longer visible, which may indicate that all the water has been drained from the measuring tank 104. The user may then close the miniature ball valve to stop drainage of fluid from the measuring tank 104 through the sampling outlet 193.

It will be appreciated that in some embodiments, the scale indicating liquid level in the internal volume of the measuring tank may be marked directly on the pipe. It will also be appreciated that the liquid level indicator may be any other suitable type of liquid level indicator.

The drainage system further comprises a storage tank 108. The storage tank has a substantially similar construction to the measuring tanks 104, forming a substantially cuboidal hollow metallic shell formed from welded stainless steel sheet to form a liquid tight container. However, the storage tank 108 is considerably larger than the measuring tanks 104. The storage tank 108 is about 1130.3 mm (44.50 inches) wide, about 1320.8 mm (52.00 inches) long and about 241.3 mm (9.5 inches) high. As such, the storage tank 108 can hold about 360 litres of fluid. Therefore, the storage tank 108 has a sufficient volume to hold at least the volume of fluid held in all of the measuring tanks.

The storage tank 108 is supported above the platform 6 on three mild steel U-channel sections (not shown) that are secured to the platform 6 with screws. The U-channel sections extend substantially in the direction of the width of the platform 6 and are spaced along the length of the platform 6 to support the front, rear and centre of the storage tank 108.

The measuring tanks 104 are arranged directly above the storage tank 108, each measuring tank 104 being supported on a stand formed from mild steel angle section. The stands raise the measuring tanks about 254 mm (10 inches) above the storage tank 108. The stands provide sufficient space for the ball valve sampling outlet 193, drainage outlet 194 and ball valve 195 to depend from the measuring tanks 104.

The drainage outlets 194 of the measuring tanks 104 are fluidly connected to the storage tank 108, via six inlets in the upper face of the storage tank 108. As such, when the ball valves 195 of the measuring tanks 104 are oriented to permit fluid to flow out of the measuring tank through the drainage outlet 194, the fluid drains out of the measuring tank 104 and into the storage tank 108.

The storage tank 108 also has a liquid level indicator as provided on the measuring tanks 104.

The storage tank 108 has a drainage outlet 200 through which fluid held in the storage tank 108 may be drained. The drainage outlet 200 of the storage tank 108 is fluidly connected to the first conduit 102, via the pump 112. More specifically, a pipe 202 fluidly connects the drainage outlet 200 of the storage tank 108 to the inlet of the pump 112. One end of the pipe 202 is fluidly connected to the drainage outlet 200 of the storage tank 108 and the other end of the pipe 202 is fluidly connected to the second ball valve 138 of the second three-way valve 134. The second ball valve 138 of the second three-way valve 134 is fluidly connected to the second end of the T-junction 136 and the first end of the T-junction 136 is fluidly connected to the inlet of the pump 112. A pipe 204 fluidly connects the outlet of the pump 112 to the second end of the hose pipe 114 of the first conduit 102. One end of the pipe 204 is fluidly connected to the second ball valve 146 of the third three-way valve 142. The second ball valve 146 of the third three-way valve 142 is fluidly connected to the second end of the T-junction 144 and the first end of the T-junction 144 is fluidly connected to the outlet of the pump 112. The other end of the pipe 204 is fluidly connected to the second ball valve 132 of the first three-way valve 128. The second ball valve 132 of the first three-way valve 128 is fluidly connected to the second end of the T-junction 130 and the first end of the T-junction 128 is fluidly connected to the second end of the hose pipe 114 of the first conduit 102.

When the second ball-valves 132, 138, 146 of the three three-way valves 128, 134, 142 are open, and the first ball-valves 131, 137, 145 of the three three-way valves 128, 134, 142 are closed, a continuous path is formed along which fluid may flow between the drainage outlet 200 of the storage tank 108, the pump 112 and the first end of the first conduit 102.

The arrangement of the pump 112 and the three three-way valves 128, 134, 142 configures the drainage system to either:
1. pump fluid from an aircraft fuel tank through the first conduit 102 and into a selected measuring tank 104, via the multiway valve 110, when the first ball-valves 131, 137, 145 of the three three-way valves 128, 134, 142 are open and the second ball-valves 132, 138, 146 of the three three-way valves 128, 134, 142 are closed; or
2. pump fluid from the storage tank 108 through the drainage valve 200 and out of the system through the first conduit 102, when the second ball-valves 132, 138, 146 of the three three-way valves 128, 134, 142 are open, and the first ball-valves 131, 137, 145 of the three three-way valves 128, 134, 142 are closed.

The storage tank 108 further comprises a sampling valve. The sampling outlet 205 is substantially similar to the sampling outlets 193 of the measuring tanks 104, and comprises a ball valve (not shown) for selectively enabling drainage of fluid form the storage tank 108 through the sampling outlet 205.

It will be appreciated that the drainage cart may also comprise other components, devices or systems mounted on the platform that may be complimentary to or separate from the drainage system.

In this embodiment, the drainage cart 1 further comprises: a fire extinguisher cabinet 210 secured to the platform 6, housing a fire extinguisher (not shown); a toolbox 212 secured to the platform 6; a storage box 214 secured to the platform 6; and a cabinet 216 secured to the platform 6.

It is envisaged that in some embodiments, a personal computer may be housed in the cabinet 216 and may be used for inputting fuel and water testing results into a database. The personal computer may be connected to a network via a wireless network for updating a remote database whilst the drainage cart is in the field.

The drainage cart 1 also comprises grounding cables (not shown) secured to the chassis, for connecting to grounding points on an aircraft that is to be defueled and to grounding points on the ground.

In some embodiments, the system may comprise one or more sensors or meters for sensing or measuring parameters of the system. For example, the system may comprise a fuel totalizer for measuring the volume of fuel and/or water that passes through the conduits. A fuel totalizer may be removably couplable to the first conduit 102, particularly between the hose pipe 114 and the purger pipes 116. Similarly, a flow rate meter may be provided for measuring the flow rate of fuel and/or water through the conduits. The flow rate meter may also be couplable to the first conduit 102, between the hose pipe 114 and the purger pipes 116. A flow rate meter may be provided as a separate device to the fuel totalizer or the flow rate meter and the fuel totalizer may be provided as part of a single integrated device. Any number of sensors or meters may be provided in the system. Each sensor or meter may be fixedly coupled to one or more parts of the system or may be removably couplable to one or more parts of the system. The one or more sensors or meters may be provided with any suitable output for outputting the sensed or measured data. Preferably, the one or more sensor or meters comprise a digital screen for displaying the sensed or measured data. Ideally, in embodiments comprising a computer housed in the cabinet 216, the one or more sensors or meters may be coupled or connected to the computer for sending or transmitting the sensed or measured data to the computer.

Various exemplary procedures for operating the drainage cart 1 and drainage system will now be described. It will be appreciated that other procedures may also be employed to operate the drainage system, and that the described procedures are exemplary procedures only.

The procedure for draining fluid from a liquid storage tank using the drainage cart 1 may comprise:
1. towing the drainage cart 1 into position proximate an aircraft with fuel tanks to be drained;
2. applying brakes on the wheels (not shown) and positioning wheel chocks under each wheel to immobilize the cart 1;
3. attaching a ground cable of the cart 1 to a grounding point on the aircraft and attaching another ground cable of the cart 1 to a grounding point on the ground;
4. coupling the second end of one of the purger pipes 116 to the first end of the hose pipe 114 via the quick release coupling (select the shorter purger pipe for draining fluid from tanks at and close to the fuselage and select the longer purger pipe for draining fluid from tanks at distal ends of the wings);
5. selecting a fuel tank to be drained and a measuring tank 104 into which fluid from the selected fuel tank is to be drained;
6. rotating the handle 156 on the multiway valve 110 to select the desired measuring tank;
7. setting the three first ball valves 131, 137, 145 of the three three-way valves 128, 134, 142 to the open position and setting the three second ball valves 132, 138, 146 to the closed position;
8. coupling the coupler at the first end of the purger pipe 116 to the drain valve of the selected fuel tank;
9. checking for leaks between the coupler and the fuel tank drain valve;
10. opening the ball valve between the purger pipe 116 and the hose pipe 114;
11. opening the nitrogen cylinder valve and setting the nitrogen cylinder regulator to about 50 psi (about 3.5 bar);
12. checking the pressure of the pump regulator is at about 35 psi (about 2.5 bar);
13. running the nitrogen powered diaphragm pump 112 to drain fluid from the selected aircraft fuel tank into to the selected measuring tank 104; and
14. inspecting the liquid level indicator 197 of the selected measuring tank to ensure that the selected measuring tank is not over filled; and
15. once a sufficient volume of fluid is drained from the aircraft fuel tank or once the aircraft fuel tank has been emptied of fluid, closing the nitrogen cylinder valve to shut down the pump 112.

The process for disconnecting the drainage cart 1 from an aircraft fuel tank and preparing the cart 1 to be towed may comprise:
1. closing the ball valve between the coupler between the hose pipe 114 and the purger pipe 116;
2. closing the nitrogen cylinder valve to stop the pump 112 operating;
3. disconnecting the coupling at the first end of the purger pipe 116 from the drain valve of the aircraft fuel tank;
4. setting the three first ball valves 131, 137, 145 of the three three-way valves 128, 134, 142 to the closed position and checking that the three second ball valves 132, 138, 146 remain in the closed position;
5. disconnecting the purger pipe 116 and the hose pipe 114;
6. disconnecting the ground cables from the grounding points on the aircraft and the ground; and
7. removing the chocks and releasing the brakes to ready the cart 1 to be towed.

The process for sampling or draining water from a measuring tank 104 may comprise:
1. selecting the measuring tank 104 to be drained;
2. arranging a suitable sampling container below the sampling outlet 193 of the selected measuring tank 104;
3. rotating the ball valve 193 of the selected measuring tank 104 to select the sampling outlet 193 to drain fluid from the measuring tank 104 through the sampling outlet 193;
4. inspecting the liquid level indicator 197 to ensure that sufficient water has been drained from the measuring tank 104;
5. rotating the ball valve 193 of the selected measuring tank 104 to stop fluid from draining from the measuring tank 104 through the sampling outlet 193.

The process for sampling or draining water from the storage tank 108 may be substantially similar to the process for sampling or draining water from the measuring tanks 104.

The process for draining a selected measuring tank 104 into the storage tank 108 may comprise:
1. selecting the measuring tank 104 to be drained;
2. rotating the ball valve 195 of the selected measuring tank 104 to select the drainage outlet 194 in order to drain fluid from the measuring tank 104 through the drainage outlet 194;
3. inspecting the liquid level indicator 197 of the selected measuring tank 104 to determine when no fluid remains in the selected measuring tank 104; and
4. rotating the ball valve 195 of the selected measuring tank 104 to stop fluid from draining from the measuring tank 104 through the drainage outlet 194.

The process for draining the storage tank 108 of fluid may comprise:
1. setting the three first ball valves 131, 137, 145 of the three three-way valves 128, 134, 142 to the closed position and setting the three second ball valves 132, 138, 146 to the open position;
2. opening the nitrogen cylinder valve and setting the nitrogen cylinder regulator to about 50 psi (about 3.5 bar);
3. checking the pressure of the pump regulator is at about 35 psi (about 2.5 bar);
4. running the nitrogen powered diaphragm pump 112 to drain fluid from the storage tank through the hose pipe 114;
5. inspecting the liquid level indicator on the storage tank 108 to ensure that a sufficient volume of fluid is drained from the storage tank 108; and
6. once a sufficient volume of fluid is drained from the storage tank 108 or once the storage tank 108 has been emptied of fluid, closing the nitrogen cylinder valve to shut down the pump 112.

It will be appreciated that the example described herein is a straightforward example, and that modifications may be made to the illustrated drainage system to provide different functionality. It will be appreciated that features described herein with reference to the described embodiment may be applied to other embodiments without departing from the scope of the invention.

## Claims

1. A drainage system for draining fluid from an aircraft fuel tank, the drainage system comprising:
a first conduit (102) configured to fluidly connect to a drainage outlet of a fuel tank of an aircraft;
a plurality of measuring tanks (104), each measuring tank (104) being configured to hold fluid drained from a fuel tank of an aircraft;
a plurality of second conduits (106), each second conduit (106) being fluidly connected to one of the plurality of measuring tanks (104);
a multiway valve (110) comprising:
a first passage (166) fluidly connected to the first conduit (102);
a plurality of second passages (168), each second passage (168) being fluidly connected to one of the plurality of second conduits (106); and
a controllable shutter configured to selectively direct fluid between the first passage (166) and the plurality of second passages (168); and
a pump (112) arranged to pump fluid through the first conduit (102).

2. A drainage system according to claim 1, wherein the multiway valve (110) is a manually operated multiway valve (110) that is configured to be operated by a user to control the controllable shutter to selectively direct fluid between the first passage (166) and the plurality of second passages (168).

3. A drainage system according to claims 1 or 2, wherein the multiway valve (110) is a multiway ball-valve comprising:
a valve body (150) comprising:
the first passage (166); and
the plurality of second passages (168);
a ball shutter (152) rotatably mounted in the valve body (150) and configured to selectively direct fluid between the first passage (166) and the plurality of second passages (168); and
an actuator configured to rotate the ball shutter (152), wherein rotation of the ball shutter (152) alters the direction of fluid between the first passage (166) and the plurality of second passages (168).

4. A drainage system according to claim 3, wherein the actuator of the multiway ball-valve is a handle (156) configured to be manually rotated by a user.

5. A drainage system according to any preceding claim, wherein each measuring tank (104) comprises:
a sampling outlet (193) for draining fluid held in the measuring tank (104); and
a sampling valve configured to control the drainage of fluid from the measuring tank (104) through the sampling outlet (193).

6. The drainage system according to any preceding claim, wherein each measuring tank (104) comprises a level indicator configured to indicate the volume of fluid held in the measuring tank (104).

7. A drainage system according to claim 6, wherein each measuring tank (104) comprises a minor portion and major portion, the minor portion having a smaller volume than the major portion and being fluidly connected to the major portion, and wherein the minor portion forms the level indicator, the minor portion comprising a viewing window configured to enable a user to see the volume of fluid held in the minor portion.

8. A drainage system according to any preceding claim, wherein the system further comprises a storage tank (108), and wherein each of the measuring tanks (104) comprises:
a drainage outlet fluidly connected to the storage tank (108) for draining fluid from the measuring tank (104) into the storage tank (108); and
a drainage valve for controlling drainage of fluid from the measuring tank (104) to the storage tank (108) through the drainage outlet.

9. A drainage system according to claim 8, wherein each of the plurality of measuring tanks (104) is configured to hold a first volume of fluid and wherein the storage tank (108) is configured to hold a second volume of fluid, the second volume of fluid being at least as large as the sum of the first volumes of all of the measuring tanks (104).

10. A drainage system according to claims 8 or 9, wherein the system further comprises a three-way valve, the three-way valve comprising:
a first passage (166) fluidly connected to the first conduit (102);
a second passage (168) fluidly connected to the first passage (166) of the multiway valve (110);
a third passage fluidly connected to the drainage outlet of the storage tank (108); and
a controllable shutter configured to selectively direct fluid between either the first conduit (102) and the multiway valve (110) or the first conduit (102) and drainage outlet of the storage tank (108),
and wherein the pump (112) is arranged to pump fluid either through the first conduit (102) to the multiway valve (110) and the measuring tanks (104) or from the drainage outlet of the storage tank (108) through the first conduit (102) and out of the system, depending on the selected direction of the controllable shutter of the three-way valve.

11. A drainage system according to claims 8, 9 or 10, wherein the storage tank (108) further comprises:
a sampling outlet (205) for draining fluid held in the storage tank (108); and
a sampling valve configured to control the drainage of fluid from the storage tank (108) through the sampling outlet (205).

12. A vehicle comprising a drainage system according to any preceding claim.

13. A method of draining fluid from the fuel tanks of an aircraft, the method comprising:
providing a drainage system as claimed in any preceding claim;
selecting a first fuel tank of an aircraft to be drained;
selecting a first measuring tank (104) of the drainage system to hold drained fluid from the selected first fuel tank of the aircraft;
adjusting the multiway valve (110) to direct fluid from the first conduit (102) to the selected first measuring tank (104);
fluidly connecting the first conduit (102) of the drainage system to an outlet of the selected first fuel tank of the aircraft; and
operating the pump (112) of the drainage system to draw fluid from the selected first fuel tank of the aircraft through the first conduit (102) and into the selected first measuring tank (104).

14. A method of draining fluid from an aircraft fuel tank according to claim 13, wherein the method further comprises:
selecting a second fuel tank of the aircraft to be drained;
selecting a second measuring tank (104) of the drainage system to hold drained fluid from the selected second fuel tank of the aircraft;
adjusting the multiway valve (110) to direct fluid from the first conduit (102) to the selected second measuring tank (104); and
fluidly connecting the first conduit (102) of the drainage system to an outlet of the selected second fuel tank of the aircraft; and
operating the pump (112) of the drainage system to draw fluid from the selected second fuel tank of the aircraft through the first conduit (102) and into the second selected measuring tank (104).

## Patentansprüche

1. Drainagesystem zum Ablassen von Flüssigkeit aus einem Flugzeugtreibstofftank, wobei das Drainagesystem Folgendes umfasst:
eine erste Leitung (102), konfiguriert zum Herstellen einer Fluidverbindung mit einem Drainageauslass eines Treibstofftanks eines Flugzeugs;
mehrere Messtanks (104), wobei jeder Messtank (104) zum Aufnehmen von aus einem Kraftstofftank eines Flugzeugs abgelassener Flüssigkeit konfiguriert ist;
mehrere zweite Leitungen (106), wobei jede zweite Leitung (106) mit einem der mehreren Messtanks (104) in Fluidverbindung steht;
ein Mehrwegeventil (110), das Folgendes umfasst:
einen ersten Kanal (166), der mit der ersten Leitung (102) in Fluidverbindung steht;
mehrere zweite Kanäle (168), wobei jeder zweite Kanal (168) mit einer der mehreren zweiten Leitungen (106) in Fluidverbindung steht; und
einen steuerbaren Verschluss, der zum selektiven Leiten von Flüssigkeit zwischen dem ersten Kanal (166) und den mehreren zweiten Kanälen (168) konfiguriert ist; und
eine Pumpe (112) zum Pumpen von Flüssigkeit durch die erste Leitung (102).

2. Drainagesystem nach Anspruch 1, wobei das Mehrwegeventil (110) ein manuell betätigtes Mehrwegeventil (110) ist, das zum Betätigen durch einen Benutzer konfiguriert ist, um den steuerbaren Verschluss zu steuern, um Flüssigkeit selektiv zwischen dem ersten Kanal (166) und den mehreren zweiten Kanälen (168) zu leiten.

3. Drainagesystem nach Anspruch 1 oder 2, wobei das Mehrwegeventil (110) ein Mehrwege-Kugelventil ist, das Folgendes umfasst:
einen Ventilkörper (150), der Folgendes umfasst:
den ersten Kanal (166); und
die mehreren zweiten Kanäle (168);
einen Kugelverschluss (152), der drehbar im Ventilkörper (150) montiert und zum selektiven Leiten von Flüssigkeit zwischen dem ersten Kanal (166) und den mehreren zweiten Kanälen (168) konfiguriert ist; und
einen Aktuator, der zum Drehen des Kugelverschlusses (152) konfiguriert ist, wobei eine Drehung des Kugelverschlusses (152) die Fließrichtung zwischen dem ersten Kanal (166) und den mehreren zweiten Kanälen (168) ändert.

4. Drainagesystem nach Anspruch 3, wobei der Aktuator des Mehrwege-Kugelventils ein Griff (156) ist, der zum manuellen Drehen durch einen Benutzer konfiguriert ist.

5. Drainagesystem nach einem vorherigen Anspruch, wobei jeder Messtank (104) Folgendes umfasst:
einen Probenahmeauslass (193) zum Ablassen von im Messtank (104) gehaltener Flüssigkeit; und
ein Probenahmeventil, konfiguriert zum Steuern des Abflusses von Flüssigkeit aus dem Messtank (104) durch den Probenahmeauslass (193).

6. Drainagesystem nach einem vorherigen Anspruch, wobei jeder Messtank (104) einen Füllstandsanzeiger umfasst, der zum Anzeigen des im Messtank (104) enthaltenen Flüssigkeitsvolumens konfiguriert ist.

7. Drainagesystem nach Anspruch 6, wobei jeder Messtank (104) einen kleineren und einen größeren Teil umfasst, wobei der kleinere Teil ein kleineres Volumen als der größere Teil hat und mit dem größeren Teil in Fluidverbindung steht, und wobei der kleinere Teil den Füllstandsanzeiger bildet, wobei der kleinere Teil ein Sichtfenster umfasst, das so konfiguriert ist, dass ein Benutzer das im kleineren Teil enthaltene Flüssigkeitsvolumen sehen kann.

8. Drainagesystem nach einem vorherigen Anspruch, wobei das System ferner einen Speichertank (108) umfasst und wobei jeder der Messtanks (104) Folgendes umfasst:
einen Drainageauslass, der mit dem Speichertank (108) in Fluidverbindung steht, um Flüssigkeit aus dem Messtank (104) in den Speichertank (108) abzulassen; und
ein Ablassventil zum Steuern des Ablassens von Flüssigkeit aus dem Messtank (104) in den Speichertank (108) durch den Drainageauslass.

9. Drainagesystem nach Anspruch 8, wobei jeder der mehreren Messtanks (104) zum Aufnehmen eines ersten Flüssigkeitsvolumens konfiguriert ist und wobei der Speichertank (108) zum Aufnehmen eines zweiten Flüssigkeitsvolumens konfiguriert ist, wobei das zweite Flüssigkeitsvolumen mindestens so groß ist wie die Summe der ersten Volumen aller Messtanks (104).

10. Drainagesystem nach Anspruch 8 oder 9, wobei das System ferner ein Dreiwegeventil umfasst, wobei das Dreiwegeventil Folgendes umfasst:
einen ersten Kanal (166), der mit der ersten Leitung (102) in Fluidverbindung steht;
einen zweiten Kanal (168), der mit dem ersten Kanal (166) des Mehrwegeventils (110) in Fluidverbindung steht;
einen dritten Kanal, der mit dem Drainageauslass des Speichertanks (108) in Fluidverbindung steht; und
einen steuerbaren Verschluss, der zum selektiven Leiten von Flüssigkeit entweder zwischen der ersten Leitung (102) und dem Mehrwegeventil (110) oder zwischen der ersten Leitung (102) und dem Drainageauslass des Speichertanks (108) konfiguriert ist,
und wobei die Pumpe (112) zum Pumpen von Flüssigkeit entweder durch die erste Leitung (102) zum Mehrwegeventil (110) und den Messtanks (104) oder vom Drainageauslass des Speichertanks (108) durch die erste Leitung (102) und aus dem System heraus je nach der gewählten Richtung des steuerbaren Verschlusses des Dreiwegeventils ausgelegt ist.

11. Drainagesystem nach Anspruch 8, 9 oder 10, wobei der Speichertank (108) ferner Folgendes umfasst:
einen Probenahmeauslass (205) zum Ablassen von im Speichertank (108) enthaltener Flüssigkeit; und
ein Probenahmeventil, das zum Steuern des Ablassens von Flüssigkeit aus dem Speichertank (108) durch den Probenahmeauslass (205) konfiguriert ist.

12. Fahrzeug mit einem Drainagesystem nach einem vorherigen Anspruch.

13. Verfahren zum Ablassen von Flüssigkeit aus den Treibstofftanks eines Flugzeugs, wobei das Verfahren Folgendes beinhaltet:
Bereitstellen eines Drainagesystems nach einem vorherigen Anspruch;
Auswählen eines ersten zu entleerenden Treibstofftanks eines Flugzeugs;
Auswählen eines ersten Messtanks (104) des Drainagesystems zum Aufnehmen von abgelassener Flüssigkeit aus dem ausgewählten ersten Treibstofftank des Flugzeugs;
Einstellen des Mehrwegeventils (110) zum Leiten von Flüssigkeit von der ersten Leitung (102) zu dem ausgewählten ersten Messtank (104);
Herstellen einer Fluidverbindung zwischen der ersten Leitung (102) des Drainagesystems und einem Auslass des ausgewählten ersten Treibstofftanks des Flugzeugs; und
Betreiben der Pumpe (112) des Drainagesystems, um Flüssigkeit aus dem ausgewählten ersten Treibstofftank des Flugzeugs durch die erste Leitung (102) und in den ausgewählten ersten Messtank (104) zu saugen.

14. Verfahren zum Ablassen von Flüssigkeit aus einem Flugzeugtreibstofftank nach Anspruch 13, wobei das Verfahren ferner Folgendes beinhaltet:
Auswählen eines zu entleerenden zweiten Treibstofftanks des Flugzeugs;
Auswählen eines zweiten Messtanks (104) des Drainagesystems zum Aufnehmen der abgelassenen Flüssigkeit aus dem ausgewählten zweiten Treibstofftank des Flugzeugs;
Einstellen des Mehrwegeventils (110) zum Leiten von Flüssigkeit von der ersten Leitung (102) zu dem ausgewählten zweiten Messtank (104); und
Herstellen einer Fluidverbindung zwischen der ersten Leitung (102) des Drainagesystems und einem Auslass des ausgewählten zweiten Treibstofftanks des Flugzeugs; und
Betreiben der Pumpe (112) des Drainagesystems, um Flüssigkeit aus dem ausgewählten zweiten Treibstofftank des Flugzeugs durch die erste Leitung (102) und in den zweiten ausgewählten Messtank (104) zu saugen.

## Revendications

1. Système de drainage pour drainer un fluide d'un réservoir à combustible d'aéronef, le système de drainage comprenant :
un premier conduit (102) configuré pour être raccordé de manière fluidique à une sortie de drainage d'un réservoir à combustible d'un aéronef ;
une pluralité de réservoirs de mesure (104), chaque réservoir de mesure (104) étant configuré pour contenir un fluide drainé d'un réservoir à combustible d'un aéronef ;
une pluralité de seconds conduits (106), chaque second conduit (106) étant connecté de manière fluidique à un de la pluralité de réservoirs de mesure (104) ;
une vanne multivoies (110) comprenant :
un premier passage (166) raccordé de manière fluidique au premier conduit
(102) ;
une pluralité de seconds passages (168), chaque second passage (168) étant raccordé de manière fluidique à un de la pluralité de seconds conduits (106) ; et
un obturateur contrôlable configuré pour diriger sélectivement un fluide entre le premier passage (166) et la pluralité de seconds passages (168); et
une pompe (112) agencée pour pomper un fluide à travers le premier conduit (102).

2. Système de drainage selon la revendication 1, dans lequel la vanne multivoies (110) est une vanne multivoies (110) actionnée manuellement qui est configurée pour être manœuvrée par un utilisateur afin de commander l'obturateur contrôlable pour rediriger sélectivement un fluide entre le premier passage (166) et la pluralité de seconds passages (168).

3. Système de drainage selon les revendications 1 ou 2, dans lequel la vanne multivoies (110) est un robinet à boisseau sphérique multivoies comprenant :
un corps de robinet (150) comprenant :
le premier passage (166) ; et
la pluralité de seconds passages (168) ;
un clapet à bille (152) monté avec faculté de rotation dans le corps de robinet (150) et configuré pour diriger sélectivement un fluide entre le premier passage (166) et la pluralité de seconds passages (168) ; et
un actionneur configuré pour faire tourner le clapet à bille (152), la rotation du clapet à bille (152) modifiant la direction du fluide entre le premier passage (166) et la pluralité de seconds passages (168).

4. Système de drainage selon la revendication 3, dans lequel l'actionneur du robinet à boisseau sphérique multivoies est une poignée (156) configurée pour être tournée manuellement par un utilisateur.

5. Système de drainage selon n'importe quelle revendication précédente, dans lequel chaque réservoir de mesure (104) comprend :
une sortie de prélèvement (193) pour drainer le fluide contenu dans le réservoir de mesure (104) ; et
une vanne de prélèvement configurée pour réguler le drainage de fluide du réservoir
de mesure (104) à travers la sortie de prélèvement (193).

6. Système de drainage selon n'importe quelle revendication précédente, dans lequel chaque réservoir de mesure (104) comprend un indicateur de niveau configuré pour indiquer le volume de fluide contenu dans le réservoir de mesure (104).

7. Système de drainage selon la revendication 6, dans lequel chaque réservoir de mesure (104) comprend une partie mineure et une partie majeure, la partie mineure ayant un volume inférieur à celui de la partie majeure et étant raccordée de manière fluidique à la partie majeure, et dans lequel la partie mineure forme un indicateur de niveau, la partie mineure comprenant un hublot de visualisation configuré pour permettre à un utilisateur de voir le volume de fluide contenu dans la partie mineure.

8. Système de drainage selon n'importe quelle revendication précédente, le système comprenant en outre un réservoir de stockage (108), et dans lequel chacun des réservoirs de mesure (104) comprend :
une sortie de drainage raccordée de manière fluidique au réservoir de stockage (108) pour drainer le fluide du réservoir de mesure (104) jusque dans le réservoir de stockage (108) ; et
une vanne de drainage pour réguler le drainage de fluide du réservoir de mesure (104) vers le réservoir de stockage (108) à travers la sortie de drainage.

9. Système de drainage selon la revendication 8, dans lequel chacun de la pluralité de réservoirs de mesure (104) est configuré pour contenir un premier volume de fluide et dans lequel le réservoir de stockage (108) est configuré pour contenir un second volume de fluide, le second volume de fluide étant au moins aussi important que la somme des premiers volumes de tous les réservoirs de mesure (104).

10. Système de drainage selon les revendications 8 ou 9, le système comprenant en outre une vanne à trois voies, la vanne à trois voies comprenant :
un premier passage (166) raccordé de manière fluidique au premier conduit (102) ;
un deuxième passage (168) raccordé de manière fluidique au premier passage (166) de la vanne multivoies (110) ;
un troisième passage raccordé de manière fluidique à la sortie de drainage du réservoir de stockage (108) ; et
un obturateur contrôlable configuré pour diriger de manière sélective un fluide entre soit le premier conduit (102) et la vanne multivoies (110), soit le premier conduit (102) et la sortie de drainage du réservoir de stockage (108),
et dans lequel la pompe (112) est agencée pour pomper le fluide soit à travers le premier conduit (102) vers la vanne multivoies (110) et les réservoirs de mesure (104), soit de la sortie de drainage du réservoir de stockage (108) à travers le premier conduit (102) et hors du système, selon la direction sélectionnée de l'obturateur contrôlable de la vanne à trois voies.

11. Système de drainage selon les revendications 8, 9 ou 10, dans lequel le réservoir de stockage (108) comprend en outre :
une sortie de prélèvement (205) pour drainer le fluide contenu dans le réservoir de stockage (108) ; et
une vanne de prélèvement configurée pour réguler le drainage de fluide du réservoir de stockage (108) à travers la sortie de prélèvement (205).

12. Véhicule comprenant le système de drainage selon n'importe quelle revendication précédente.

13. Procédé de drainage d'un fluide de réservoirs à combustible d'un aéronef, le procédé comprenant :
la fourniture du système de drainage selon n'importe quelle revendication précédente ;
la sélection d'un premier réservoir à combustible d'un aéronef à drainer ;
la sélection d'un premier réservoir de mesure (104) du système de drainage destiné à contenir le fluide provenant du premier réservoir à combustible sélectionné de l'aéronef ;
le réglage de la vanne multivoies (110) pour diriger le fluide du premier conduit (102) vers le premier réservoir de mesure (104) sélectionné ;
le raccordement de manière fluidique du premier conduit (102) du système de drainage à une sortie du premier réservoir à combustible sélectionné de l'aéronef ; et
l'actionnement de la pompe (112) du système de drainage pour faire couler le fluide du premier réservoir à combustible sélectionné de l'aéronef à travers le premier conduit (102) jusque dans le premier réservoir de mesure sélectionné (104).

14. Procédé de drainage d'un fluide d'un réservoir à combustible d'aéronef selon la revendication 13, le procédé comprenant en outre :
la sélection d'un deuxième réservoir à combustible d'un aéronef à drainer ;
la sélection d'un deuxième réservoir de mesure (104) du système de drainage destiné à contenir le fluide provenant du deuxième réservoir à combustible sélectionné de l'aéronef ;
le réglage de la vanne multivoies (110) pour diriger le fluide du premier conduit (102) vers le deuxième réservoir de mesure (104) sélectionné ; et
le raccordement de manière fluidique du premier conduit (102) du système de drainage à une sortie du deuxième réservoir à combustible sélectionné de l'aéronef ; et
l'actionnement de la pompe (112) du système de drainage pour faire couler le fluide du deuxième réservoir à combustible sélectionné de l'aéronef à travers le premier conduit (102) jusque dans le deuxième réservoir de mesure sélectionné (104).
